# EUROPEAN PATENT SPECIFICATION

(11) **EP 3 557 237 B1**
(45) Date of publication and mention of the grant of the patent: **03.01.2024**
(21) Application number: 16921623.1
(22) Date of filing: 18.11.2016
(51) Int. Cl.: G01N 27/26, G01N 17/02, G01N 17/00

(54) **ACM SENSOR INSTALLATION DEVICE AND ACM SENSOR INSTALLATION METHOD**
VORRICHTUNG ZUR ACM-SENSORINSTALLATION UND VERFAHREN ZUR ACM-SENSORINSTALLATION
DISPOSITIF D'INSTALLATION DE CAPTEUR D'ACM ET PROCÉDÉ D'INSTALLATION DE CAPTEUR D'ACM

(43) Date of publication of application: 23.10.2019
(60) Divisional application: 22210725.2
(73) Proprietor: Tokyo Electric Power Company Holdings, Incorporated, Tokyo 100-8560 (JP)
(72) Inventor: OSADA, Masanori, Tokyo 100-8560 (JP); TATSUOKA, Teruhisa, Tokyo 100-8560 (JP); OHTA, Hiroshi, Tokyo 100-8560 (JP); HIDA, Tomohito, Tokyo 100-8560 (JP)
(74) Representative: EP&C
(86) International application number: PCT/JP2016/084252
(87) International publication number: WO 2018/092263

(56) References cited:
- EP-A2- 2 275 800
- JP-A- 2004 350 418
- JP-A- 2004 350 418
- JP-A- 2012 093 157
- JP-A- 2012 189 475
- JP-A- 2012 194 034
- JP-A- 2012 194 034
- JP-A- 2013 206 236
- US-A1- 2008 272 191
- Teruhisa Tatsuoka, Yoshinori Sato, Takao Suzuki: "Fe/Ag, Zn/Ag, Al/Ag-Tai ACM-gata Fushoku Sensor o Mochiita Soden Setsubi no Kankyo Hyoka", Fushoko Boshoku Symposium Shiryo, vol. 165, 2008, pages 49-58, XP009516534,
- Teruhisa Tatsuoka et al: "Tetto Kokan Naigai Kankyo no Fushokusei Hyoka", Proceedings of the Japan Conference on Materials and Environments, vol. 61, 12 November 2014 (2014-11-12), pages 291-294, XP009518230,
- Anonymous: "Raccords tubulaires catalogue 2015 - Ernst Brinck & Co. GmbH - PDF Catalogs | Technical Documentation | Brochure", , 1 January 2015 (2015-01-01), XP055941533, Retrieved from the Internet: URL:https://pdf.directindustry.com/pdf/ern st-brinck-co-gmbh/raccords-tubulaires-cata logue-2015/187885-692186.html#open1836865 [retrieved on 2022-07-12]
- Ltd: "PARTS LIST MATERIAL DESCRIPTION QTY ITEM Aluminum Alloy -LM25 -BS1490 Square tape clamp to suit 25 x 3 mm Aluminium tape -Base 1 1 Aluminum Alloy -LM25 -BS1490 Square tape clamp to suit 25 x 3 mm Aluminium tape Lid - un-branded 1 2 Stainless Steel Cross Recessed Flat Countersunk Head Machine Screw -", Copyright, 2 August 2013 (2013-08-02), XP093013482, Retrieved from the Internet: URL:https://www.jointingtech.co.uk/Downloa d/CT007_CD_01_0.pdf

## Description

### [Technical Field]

The present invention relates to an atmospheric corrosion monitor, ACM, sensor placement device and an ACM assembly.

### [Background Art]

An electric power facility may be configured using metal materials in some cases. Examples of such electric power facility include a transformer, a steel tower, a bridge, and an electric wire using steel, zinc plating, or aluminum. A steel tower is for holding power transmission lines. Such electric power facility may be provided outdoors, for example, and may also be provided in a scattered manner over a wide area.

It is very important to evaluate corrosion speeds of metal materials that are included in a power facility and to appropriately and efficiently perform maintenance of the electric power facility. Recently, an atmospheric corrosion monitor (ACM) sensor capable of quantitatively evaluating corrosion speeds in shorter time and in a simpler manner as compared with an exposure test has been used to monitor atmospheric environments and evaluate corrosion speeds.

As an example, Patent Literature 1 discloses a corrosion speed evaluation method in which a virtual wet time weighed by a relative humidity as at least one of explanation variables is included in multiple regression analysis using a corrosion speed of a metal material as an objective variable and an environmental factor and a terrain factor, which affect the corrosion speed, as explanatory variables, a corrosion speed estimation formula is obtained by a multiple regression analysis method on the basis of the measured corrosion speed of the metal material, and the corrosion speed of the metal material in a non-measurement area is arithmetically estimated on the basis of the obtained corrosion speed estimation formula and the like (see Claim 1 and the like of Patent Literature 1).

As another example, Patent Literature 2 discloses, for example, a corrosion speed estimation method of a structure using an ACM sensor, the method including: (1) a process of obtaining the amount of electricity on the basis of temporal output current data of a reference ACM sensor that is placed on a surface portion of an actual structure for a predetermined period of time such that it is possible to measure temporal data of an output current; (2) a process of placing an evaluation target ACM sensor, which has been placed for the predetermined period in a state in which electrical continuity is established between an anode and a cathode on the surface portion of the actual structure, under constant-temperature and constant-humidity conditions along with the reference ACM sensor and measuring currents output therefrom; (3) a process of obtaining the amount of electricity of the evaluation target ACM sensor on the basis of a relationship between a current output from the reference ACM sensor and a current output from the evaluation target ACM sensor in the process (2) and the amount of electricity of the reference ACM sensor; and (4) a process of obtaining an estimated corrosion speed of the actual structure on the basis of the amount of electricity of the evaluation target ACM sensor obtained in the process (3) and a preset relationship between the amount of electricity and the corrosion speed (see Claim 1 and the like of Patent Literature 2). In this manner, corrosion properties of a structure at a predetermined point are evaluated on the basis of an output current value and an exposure time of the reference ACM sensor stored in a data logger, for example.

Patent Literature 3, disclosing the features of the preamble of claim1, discloses a corrosion environment measuring apparatus for the insides of various members composing a steel tower, a corrosion environment measuring method for the insides of various members composing the steel tower by using the corrosion environment measuring apparatus, and a method for arranging the corrosion environment measuring apparatus in the insides of various members composing the steel tower. The corrosion environment measuring apparatus for the insides of various members composing a steel tower is formed by fixing a plurality of mounts to a thin plate member having a predetermined length and formed by using a flexible material which is bent when predetermined external force or more is applied, and restored to a straight state when the external force is removed, and attaching ACM sensors to respective mounts. While bending the thin plate member, the corrosion environment measuring apparatus is inserted into the inside of each of various members composing the steel tower and the thin plate member to which the ACM sensors are attached is arranged in the inside of the member concerned.

Patent Literature 4 discloses providing a fixture for an exposure test piece to a ground transformer in which a corrosion state of an exposure test piece can be observed in the environment where a ground transformer is installed, by installing the fixture for the exposure test piece in the ground transformer and mounting the exposure test piece on the ground transformer itself, and a corrosion state measuring method of ground transformer using the fixture for the exposure test piece. The fixture for an exposure test piece to a ground transformer is installed in the vicinity of a ventilation port which is positioned in a lower part of the ground transformer, and comprises a holder body to which the exposure test piece is mounted for measuring a corrosion state of the ground transformer in a simulative manner. The holder body includes a base plate member which is formed in a shape of rectangular plate approximately matched with the exposure test piece, frame parts provided at both right and left edges on a front face of the base plate member, and a projection provided in a lower end portion on the front face of the base plate member.

Patent Literature 5 discloses writing and identifying information of a utility pole and its assembling members easily while eliminating aging or an unidentifiable situation. An RFID storing the identification information of a utility pole is secured to the outer circumference of the utility pole 1 by means of an RFID securing means. The RFID is prestored with identification information of the utility pole and its assembling members. When maintenance/management work is performed, information in the RFID is read out by means of a reader and since the identification information is recognized easily, and preparatory work time is shortened significantly in the maintenance/management work of the utility pole.

Patent Literature 6 discloses a corrosion detecting apparatus includes a first conductive part, an insulating film part made of a material same as that applied to an outdoor structure, which covers the first conductive part, and linear second conductive parts provided in plural with a predetermined gap therebetween on top of the film part, to detect a corrosion current generated due to degradation of the film part. The corrosion current is detected by a water film generated by a crack formed due to degradation of the film part.

However, an operation of efficiently attaching an ACM sensor to a desired position, such as on a steel tower, in a desired direction may be complicated in some cases in the related art.

Also, a measurement result (measurement value) obtained by the ACM sensor is determined by the amount of adhesion of substances floating in the air, and the amount of adhesion depends on the placement position or the placement direction of the ACM sensor. Therefore, it is necessary to secure an appropriate placement position or placement direction for the ACM sensor in order to accurately perform the measurement.

### [Citation List]

### [Patent Literature]

[Patent Literature 1]
   Japanese Unexamined Patent Application, First Publication No. 2008-224405
[Patent Literature 2]
   Japanese Unexamined Patent Application, First Publication No. 2008-157647
[Patent Literature 3]
   Japanese Unexamined Patent Application, First Publication No. 2012-189475
[Patent Literature 4]
   Japanese Unexamined Patent Application, First Publication No. 2012-194034
[Patent Literature 5]
   Japanese Unexamined Patent Application, First Publication No. 2004-350418
[Patent Literature 6]
   European Patent Application, First Publication No. 2 275 800

### [Summary of Invention]

### [Technical Problem]

An object to be solved by the invention is to provide an ACM sensor placement device and an ACM assembly enabling efficient placement of an ACM sensor.

### [Solution to Problem]

According to an aspect, an ACM sensor placement device comprises: a holder comprising: a main body with two opposite surfaces, including two claw portions, each of which being provided at each of two facing sides of a first one of the two surfaces of the main body, the claw portions each being provided with a sensor fitting groove; and a cover portion being provided on the second one of the two surfaces of the main body. Two band insertion holes configured to receive an insertable band are provided in the cover portion, a first one of the band insertion holes extending in the direction in which the two claw portions face each other, and the second one of the band insertion holes extending perpendicular to the direction in which the two claw portions face each other, wherein the band insertion holes are connected to each other, and form a cross shape as a whole. The main body comprises penetrating stopper insertion holes each configured for insertion of a stopper, and provided on opposite end sides of the main body, as seen perpendicular to the direction in which the two claw portions face each other, and the two claw portions and the stopper insertion holes are configured for securing an ACM sensor in the holder.

### [Advantageous Effects of Invention]

According to the ACM sensor placement device and the ACM assembly, it is possible to efficiently place an ACM sensor.

### [Brief Description of Drawings]

Fig. 1 is a diagram (front view) illustrating an outline configuration of an ACM sensor in an embodiment of the invention.
Fig. 2 is a diagram (A-A sectional view) illustrating an outline configuration of the ACM sensor in an embodiment of the invention.
Fig. 3A is a diagram (front view) illustrating an outline configuration of a holder (first example) of the ACM sensor, the holder not being part of the invention.
Fig. 3B is a diagram (plan view) illustrating an outline configuration of the holder (first example) of the ACM sensor.
Fig. 3C is a diagram (bottom view) illustrating an outline configuration of the holder (first example) of the ACM sensor.
Fig. 3D is a diagram (left side view) illustrating an outline configuration of the holder (first example) of the ACM sensor.
Fig. 3E is a diagram (right side view) illustrating an outline configuration of the holder (first example) of the ACM sensor .
Fig. 4 is a central sectional view (B-B sectional view) illustrating an outline configuration of the holder (first example) of the ACM sensor.
Fig. 5 is a diagram illustrating an outline configuration (example) in which a band is attached to the holder (first example) of the ACM sensor.
Fig. 6 is a diagram illustrating an outline configuration (another example) in which the band is attached to the holder (first example) of the ACM sensor.
Fig. 7 is a diagram illustrating an outline configuration in which the holder (first example) of the ACM sensor is attached to a pillar with a band.
Fig. 8A is a diagram (front view) illustrating an outline configuration of a holder (second example) of an ACM sensor, the holder not being part of the invention.
Fig. 8B is a diagram (plan view) illustrating an outline configuration of the holder (second example) of the ACM sensor.
Fig. 8C is a diagram (bottom view) illustrating an outline configuration of the holder (second example) of the ACM sensor.
Fig. 8D is a diagram (left side view) illustrating an outline configuration of the holder (second example) of the ACM sensor.
Fig. 8E is a diagram (right side view) illustrating an outline configuration of the holder (second example) of the ACM sensor.
Fig. 9 is a central sectional view (C-C sectional view) illustrating an outline configuration of the holder (second example) of the ACM sensor.
Fig. 10A is a diagram (front view) illustrating an outline configuration of a holder (third example) of an ACM sensor, the holder not being part of the invention.
Fig. 10B is a diagram (plan view) illustrating an outline configuration of the holder (third example) of the ACM sensor.
Fig. 10C is a diagram (bottom view) illustrating an outline configuration of the holder (third example) of the ACM sensor.
Fig. 10D is a diagram (left side view) illustrating an outline configuration of the holder (third example) of the ACM sensor.
Fig. 10E is a diagram (right side view) illustrating an outline configuration of the holder (third example) of the ACM sensor.
Fig. 11 is a central sectional view (D-D sectional view) illustrating an outline configuration of the holder (third example) of the ACM sensor.
Fig. 12A is a diagram (front view) illustrating an outline configuration of a holder (fourth example) of an ACM sensor according to an embodiment of the invention.
Fig. 12B is a diagram (plan view) illustrating an outline configuration of the holder (fourth example) of the ACM sensor according to an embodiment of the invention.
Fig. 12C is a diagram (bottom view) illustrating an outline configuration of the holder (fourth example) of the ACM sensor according to an embodiment of the invention.
Fig. 12D is a diagram (left side view) illustrating an outline configuration of the holder (fourth example) of the ACM sensor according to an embodiment of the invention.
Fig. 12E is a diagram (right side view) illustrating an outline configuration of the holder (fourth example) of the ACM sensor according to an embodiment of the invention.
Fig. 13 is a central sectional view (E-E sectional view) illustrating an outline configuration of the holder (fourth example) of the ACM sensor according to an embodiment of the invention.
Fig. 14 is a diagram (front view) illustrating an outline appearance of the holder (fourth example) of the ACM sensor according to an embodiment of the invention.
Fig. 15 is a diagram (back view) illustrating an outline appearance of the holder (fourth example) of the ACM sensor according to an embodiment of the invention.
Fig. 16 is a diagram (plan view) illustrating an outline appearance of the holder (fourth example) of the ACM sensor according to an embodiment of the invention.
Fig. 17 is a diagram illustrating an example of a relationship between a main wind direction and a measurement result obtained by the ACM sensor in an embodiment of the invention.
Fig. 18 is a diagram illustrating an outline configuration of attachment of the ACM sensor in an embodiment of the invention.
Fig. 19 is a diagram illustrating an example of a processing flow for estimating corrosion speed data at a non-measurement point from corrosion speed data at a measurement point in an embodiment of the invention.
Fig. 20 is a diagram illustrating an example of a processing flow for estimating a corrosion speed in accordance with a measurement result obtained by an evaluation target ACM sensor from a measurement result obtained by a reference ACM sensor in an embodiment of the invention.

### [Description of Embodiments]

In the drawings used for describing the following embodiments, sizes of the respective components and size ratios of the plurality of components may be different from actual sizes and size ratios for convenience of explanation.

### [ACM sensor]

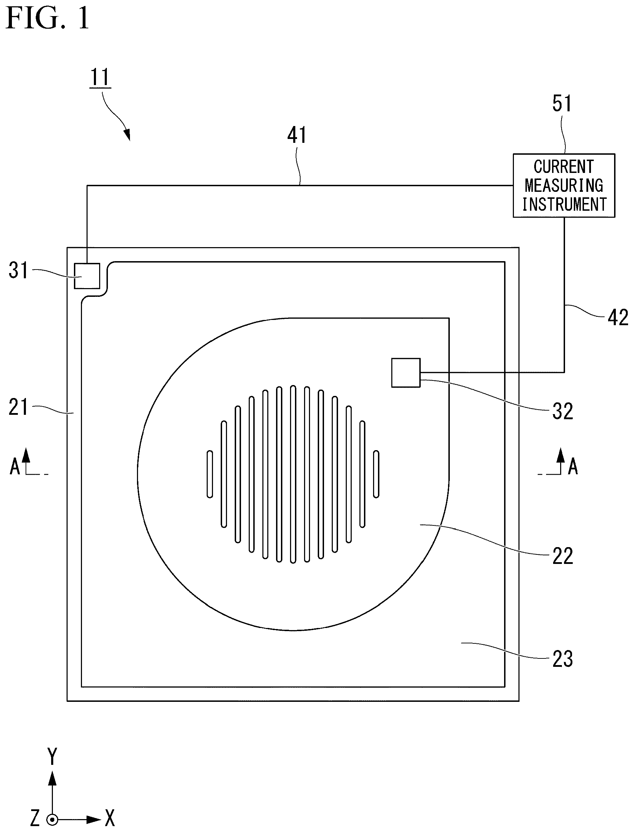

Fig. 1 is a diagram (front view) illustrating an outline configuration of an ACM sensor 11 in an embodiment of the invention.

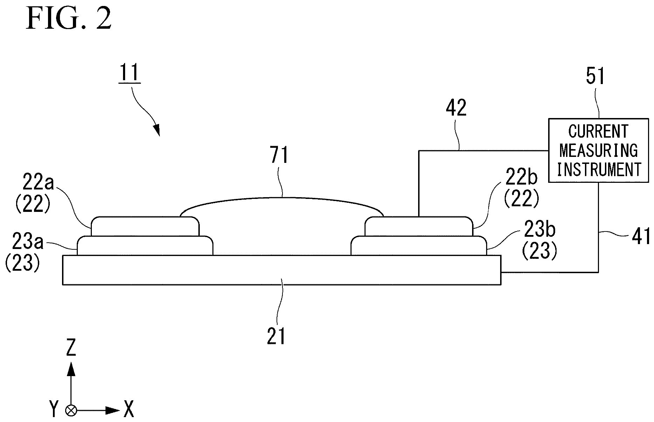

Fig. 2 is a diagram (A-A sectional view) illustrating an outline configuration of the ACM sensor 11 in an embodiment of the invention. Fig. 2 is an A-A sectional view with respect to Fig. 1 (front view).

Figs. 1 and 2 illustrate XYZ orthogonal coordinate systems for convenience of explanation.

The ACM sensor 11 can measure a corrosion speed of a metal material as information related to corrosion of the metal material.

In an outline, the ACM sensor 11 is configured with two different types of metals incorporated in resin in a mutually insulated state and opposite ends exposed to an environment, and a corrosion current that flows when a water film couples both kinds of metals is measured to measure a corrosion speed of the metal. The ACM sensor 11 is used to quantitatively evaluate corrosion in an environment of ambient air, for example.

The ACM sensor 11 includes a steel substrate 21, a conductive member 22, an insulating member 23, conductive wires 41 and 42, and a current measuring instrument 51.

The insulating member 23 and the conductive member 22 are laminated on the surface of the steel substrate 21.

One end of the conductive wire 41 is connected to a predetermined location (connecting location 31) provided on the steel substrate 21, and one end of the conductive wire 42 is connected to a predetermined location (connecting location 32) provided on the conductive member 22. The other end of the conductive wire 41 and the other end of the conductive wire 42 are connected to the current measuring instrument 51.

Note that Fig. 2 illustrates the conductive member 22 illustrated in Fig. 1 as conductive members 22a and 22b and illustrates the insulating member 23 illustrated in Fig. 1 as insulating members 23a and 23b.

Also, a water film 71 is illustrated in the example in Fig. 2.

In addition, the steel substrate 21 is made of iron (Fe), for example, and the conductive member 22 is made of silver (Ag), for example.

Here, when an environment at the position (point) where the ACM sensor 11 is placed is in a dried state, and nothing has accumulated on the surface of the ACM sensor 11, the steel substrate 21 and the conductive member 22 are insulated with the insulating member 23. At this time, no potential occurs between the steel substrate 21 and the conductive member 22, and the current measuring instrument 51 does not measure a current.

Meanwhile, a water film 71 may be formed due to rain or dew at a portion at which the steel substrate 21 and the conductive member 22 are isolated and disposed on the surface (the surface illustrated in Fig. 1 in this example) of the ACM sensor 11. At this time, the steel substrate 21 and the conductive member 22 are electrically connected with the water film 71, a potential difference occurs between these kinds of metals, and a current (galvanic current) occurs due to the potential difference. In general, since there is a correlation with the amount of corrosion of the steel material or the zinc material, it is possible to quantitatively evaluate the corrosion speed by measuring the galvanic current using the current measuring instrument 51.

Note that factors that may affect corrosion properties of metals include, for example, e a temperature, a humidity, rain drops, airborne sea salt, corrosive gas (SOx), and the like. The ACM sensor 11 can directly measure a corrosion current of steel that electrochemically occurs due to such complicated environmental factors. Therefore, it is possible to directly and quantitatively evaluate corrosion properties of the environment by analyzing an output current value of the ACM sensor 11.

### [Configuration example (first example) of holder of ACM sensor]

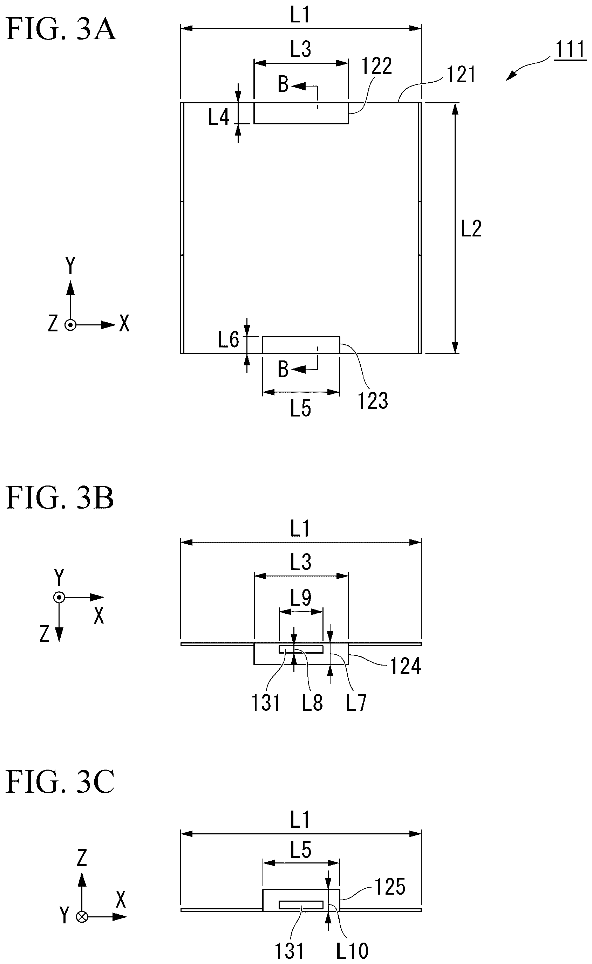

Fig. 3A is a diagram (front view) illustrating an outline configuration of a holder 111 (first example) of the ACM sensor 11.

Fig. 3B is a diagram (plan view) illustrating an outline configuration of the holder 111 (first example) of the ACM sensor 11.

Fig. 3C is a diagram (bottom view) illustrating an outline configuration of the holder 111 (first example) of the ACM sensor 11.

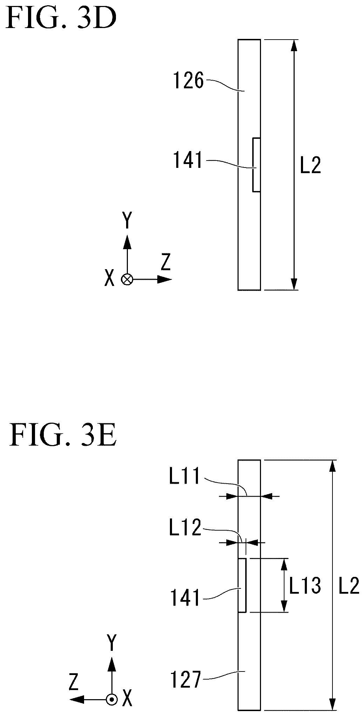

Fig. 3D is a diagram (left side view) illustrating an outline configuration of the holder 111 (first example) of the ACM sensor 11.

Fig. 3E is a diagram (right side view) illustrating an outline configuration of the holder 111 (first example) of the ACM sensor 11.

Note that although the drawings are referred to as the front view, the plan view, the bottom view, the left side view, and the right side view in the example for convenience of explanation, any surface of the holder 111 may be considered as a front surface or another surface.

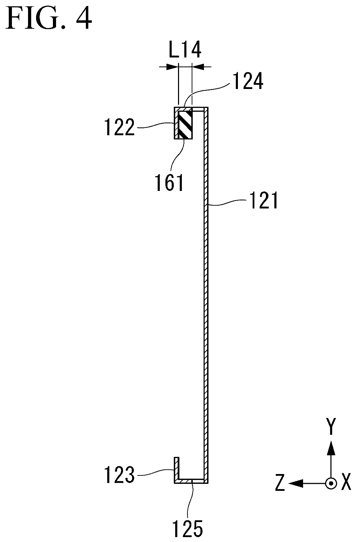

Fig. 4 is a central sectional view (B-B sectional view) illustrating an outline configuration of the holder 111 (first example) of the ACM sensor 11. Fig. 4 is a B-B sectional view with respect to Fig. 3A (front view).

Figs. 3A to 3E and 4 illustrate XYZ orthogonal coordinate systems for convenience of explanation.

The holder 111 includes a main body 121 and two claw portions (a claw portion including surfaces 122 and 124 and a claw portion including surfaces 123 and 125).

The main body 121 has a flat plate shape, and the surface of the flat plate (a surface parallel to an XY plane in this example) has a substantially square shape.

The main body 121 includes two claw portions. The two claw portions are provided at each of two facing sides of the substantially square shape that the main body 121 has. The two claw portions are provided at the centers of the corresponding sides of the main body 121. One of the claw portions includes the surface 122 and the surface 124. The other claw portion includes the surface 123 and the surface 125.

Holes (band insertion holes 131) penetrating in a direction in which these two claw portions face each other (the Y-axis direction in this example) are provided in the side surface portions (the surface 124 and the surface 125) of the two claw portions.

Also, side surface portions 126 and 127 are provided at the respective two different facing sides of the substantially square shape that the main body 121 has. The respective side surface portions 126 and 127 have surfaces with plate shapes (surfaces parallel to a YZ plane in the example). Holes (band insertion holes 141) penetrating in a direction in which these two side surface portions 126 and 127 (the surfaces parallel to the YZ plane in the example) face each other (the X-axis direction in the example) are provided in these side surface portions 126 and 127.

Also, a rubber plate 161 is provided inside one of the claw portions (the claw portion including the surface 122 and the surface 124).

Here, specific examples of numerical values of dimensions related to the holder 111 will be described. Note that the numerical values are not limited to those in the example, and other arbitrary numerical values may be used.

The length L1 of one width (the width in the X-axis direction in this example) of the substantially square shape that the main body 121 has is about 65 mm, the length L2 of the other width (the width in the Y-axis direction in this example) is about 68 mm, and the plate thickness (the length of the thickness in the Z-axis direction in this example) is about 0.3 to 0.5 mm.

The length L3 of the width of the surface 122 of one of the claw portions (the width in the X-axis direction in this example) is about 40 mm, and the length L4 of the projecting portion of the claw is about 3 to 6 mm. The length L5 of the width of the surface 123 of the other claw portion is about 30 mm, and the length L6 of the projecting portion of the claw is about 2 to 4 mm.

The lengths L7 and L10 of the two claw portions in the height direction (the Z-axis direction in this example) are about 5 to 8 mm.

The length L11 of the surfaces of the side surface portions 126 and 127 in the height direction (the Z-axis direction in this example) is about 5 to 8 mm.

The sizes of the respective band insertion holes 131 and 141 (the lengths L8 and L12 in the height direction (the Z-axis direction in this example) and the lengths L9 and L13 in the width direction (the direction parallel to the XY plane in this example) are slightly larger than the size of the band used.

The thickness (length L14) of the rubber plate 161 in the height direction (the Z-axis direction in the example) is about 2 mm.

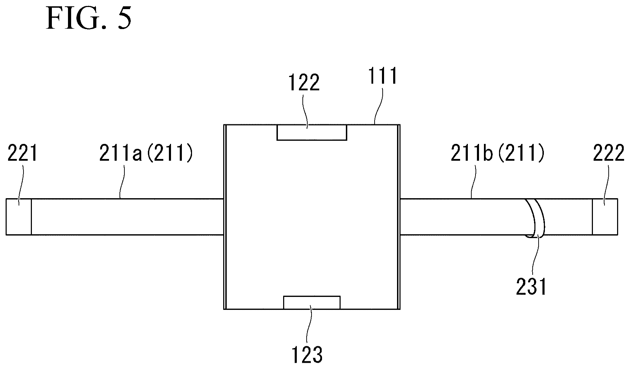

Fig. 5 is a diagram (a view from the front) illustrating an outline configuration (example) in which the band 211 is attached to the holder 111 (first example) of the ACM sensor 11.

In the example in Fig. 5, the band 211 is inserted through the band insertion hole 141 provided in the main body 121. Note that each of a band 211a and a band 211b indicates a portion of the same band 211.

The band 211 is made of a metal or resin, for example, and may be made of stainless steel in one example. The band 211 includes fastening portions 221 and 222 at the opposite ends. These two fastening portions 221 and 222 can be attached to and detached from each other.

Also, the band 211 includes a loop 231 at which a cable or the like can be hooked.

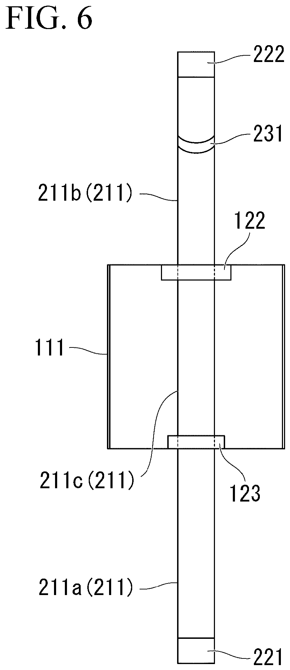

Fig. 6 is a diagram (a view from the front) illustrating an outline configuration (another example) in which the band 211 is attached to the holder 111 (first example) of the ACM sensor 11.

Note that in the example in Fig. 6, the same reference numerals are given to elements that are the same as those illustrated in Fig. 5. Note that each of the band 211a, the band 211b, and the band 211c represents a part of the same band 211.

In the example in Fig. 6, the band 211 is inserted through the band insertion hole 131 provided at the claw portion.

As illustrated in Figs. 5 and 6, it is possible to insert the band 211 through the holder 111 in this example in each of two directions (the X-axis direction and the Y-axis direction in this example) that are perpendicular to each other. The direction through which the band 211 is inserted in these two directions may be decided on the basis of utilization conditions and the like of the ACM sensor 11 and the holder 111.

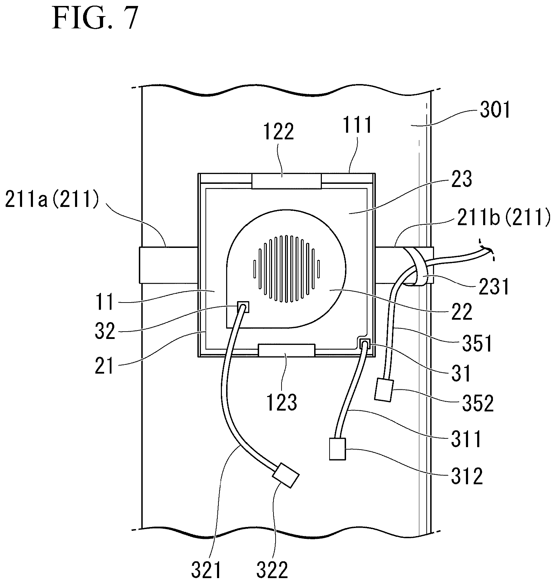

Fig. 7 is a diagram illustrating an outline configuration in which the holder 111 (first example) of the ACM sensor 11 is attached to a pillar 301 with the band 211.

In the example in Fig. 7, the ACM sensor 11 is attached such that the ACM sensor 11 is pinched between the two claw portions of the holder 111. Also, the band 211 is inserted through the holder 111 (an aspect related to the example in Fig. 5), and the fastening portions 221 and 222 at the opposite ends of the band 211 are fastened in a state in which the band 211 is wound around the pillar 301 such as a steel tower in a surrounding manner.

Also, a cable 351 of a data logger (not illustrated), for example, is hooked at the loop 231 of the band 211. The cable 351 includes a connector 352 at the tip end thereof.

A cable 311 is connected at a connecting location 31, and a cable 321 is connected at a connecting location 32 of the ACM sensor 11. The cables 311 and 321 include connectors 312 and 322, respectively, at the tip ends.

The connectors 312 and 322 of the two cables 311 and 321 provided at the ACM sensor 11 are connected to a connector 352 of the cable 351 of the data logger (not illustrated), for example.

Here, an example of a procedure for securing the ACM sensor 11 (a procedure for attaching the ACM sensor 11) using the holder 111 as illustrated in Fig. 7 will be described.

First, the band 211 is inserted through the holder 111, and the band 211 is temporarily fastened at a predetermined position (the position of a measurement location) of the pillar 301 (loosely fastened with the fastening portions 221 and 222, for example).

Next, the ACM sensor 11 is fitted into the holder 111 and is secured thereto with the claw portions, and the cable 351 of the data logger (not illustrated) is inserted into the loop 231 of the band 211 to cause the loop 231 to support the cable 351. Note that the ACM sensor 11 is attached to the holder 111 such that the cables 311 and 321 on the side of the ACM sensor 11 are in a predetermined disposition (a downward direction that is the direction of gravity, for example), for example. The ACM sensor 11 is prevented from being pulled out with the claw portions (stoppers in another example) of the holder 111.

Next, the band 211 is fastened and secured with the fastening portions 221 and 222.

Next, the cables 311 and 321 on the side of the ACM sensor 11 and the cable 351 of the data logger are connected to each other using the connectors 312, 322, and 352.

Note that the cables 311 and 321 and the connectors 312 and 322 on the side of the ACM sensors 11 may be bundled and integrated.

Here, in a case in which the holder 111 into which the band 211 can be inserted in two directions (for example, a horizontal direction and a vertical direction or the like) that are perpendicular to each other is used, the band 211 may be wound in the horizontal direction in a case in which the ACM sensor 11 is placed at a member that is long in the vertical direction (the examples in Figs. 5 and 7), and the band 211 may be wound in the vertical direction in a case in which the ACM sensor 11 is placed at a member that is long in the horizontal direction (the example in Fig. 6).

Also, an exposure test piece (this will be regarded as a type of sensor in the embodiment) may be used as a sensor instead of the ACM sensor 11 in the embodiment. In the embodiment, the ACM sensor 11 and the exposure test piece are formed into the same shape (or substantially the same shape), and both can be fitted into the holder 111.

### [Other configuration example (second example) of holder of ACM sensor]

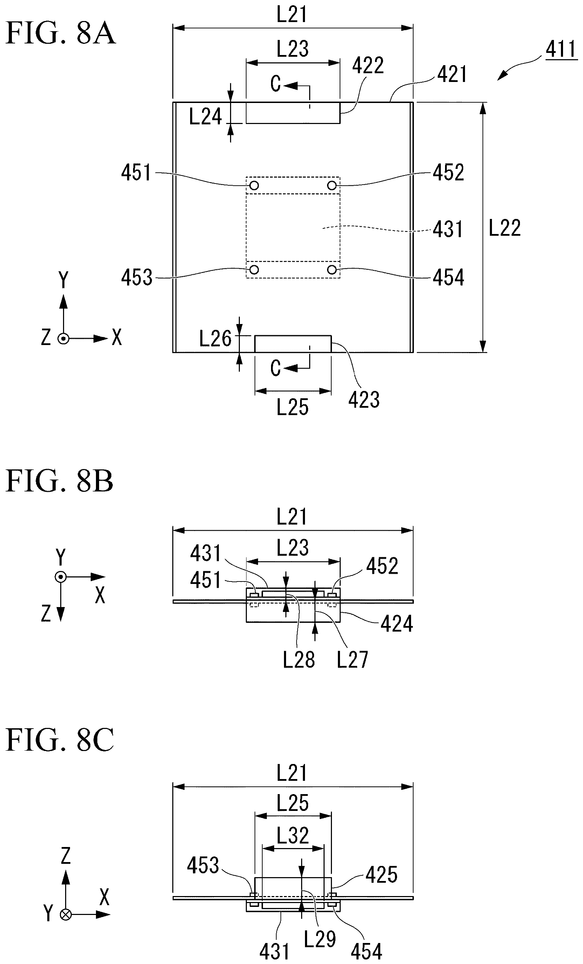

Fig. 8A is a diagram (front view) illustrating an outline configuration of a holder 411 (second example) of the ACM sensor 11.

Fig. 8B is a diagram (plan view) illustrating an outline configuration of the holder 411 (second example) of the ACM sensor 11.

Fig. 8C is a diagram (bottom view) illustrating an outline configuration of the holder 411 (second example) of the ACM sensor 11.

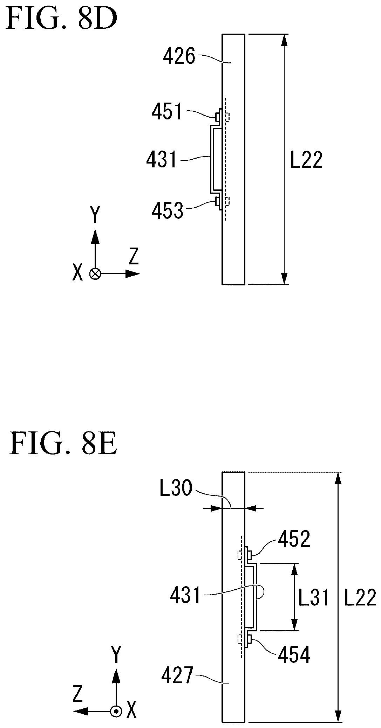

Fig. 8D is a diagram (left side view) illustrating an outline configuration of the holder 411 (second example) of the ACM sensor 11.

Fig. 8E is a diagram (right side view) illustrating an outline configuration of the holder 411 (second example) of the ACM sensor 11.

Note that although the diagrams are referred to as the front view, the plan view, the bottom view, the left side view, and the right side view for convenience of explanation in the example, an arbitrary surface of the holder 411 may be regarded as a front surface or another surface.

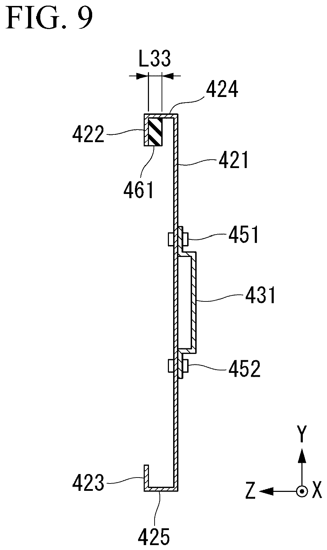

Fig. 9 is a central sectional view (C-C sectional view) illustrating an outline configuration of the holder 411 (second example) of the ACM sensor 11. Fig. 9 is a C-C sectional view with respect to Fig. 8A (front view).

Figs. 8A to 8E and 9 illustrate XYZ orthogonal coordinate systems for convenience of explanation.

In an outline, the holder 411 includes a main body 421, two claw portions (a claw portion including surfaces 422 and 424 and a claw portion including surfaces 423 and 425), and one cover portion 431.

The main body 421 has a flat plate shape, and the surface of the flat plate (the surface in parallel with the XY plane in this example) has a substantially square shape.

The main body 421 includes two claw portions. The two claw portions are provided at each of two facing sides of the substantially square shape that the main body 421 has. The two claw portions are provided at the centers of the corresponding sides of the main body 421. One of the claw portions includes the surface 422 and the surface 424. The other claw portion includes the surface 423 and the surface 425.

The cover portion 431 with a substantially square-shaped portion projecting therefrom is provided at the center of the surface on the side opposite to the surface of the main body 421 on which the two claw portions are provided. The surface with the square shape that the cover portion 431 has is smaller than the surface of the square shape that the main body 421 has, and a disposition in which the centers of these surfaces coincide with each other is employed. Four locations at a portion (the portion that does not project) in the surroundings of the projecting portion of the cover portion 431 are connected and fastened to the main body 421 using four rivets 451 to 454. These four locations are provided two by two at the respective locations that are close to the two claw portions. The portion in the surroundings (the portion that does not project) has a size (width and the like) capable of supporting the band.

Also, side surface portions 426 and 427 are provided at the respective two different facing sides of the substantially square shape that the main body 421 has. Each of the side surface portions 426 and 427 has a surface (the surface parallel to the YZ plane in this example) with the plate shape.

With the cover portion 431, a hole (band insertion hole) penetrating in the direction in which the two claw portions face each other (the Y-axis direction in this example) is provided, and a hole (band insertion hole) penetrating in the direction in which the two side surface portions 426 and 427 face each other (the X-axis direction in this example) is provided. These band insertion holes are formed by spaces between the projecting portion of the cover portion 431 and the surface of the main body 421.

Also, a rubber plate 461 is provided inside one of the claw portions (the claw portion including the surface 422 and the surface 424).

The band can be inserted in each of two directions (the X-axis direction and the Y-axis direction in this example) that are perpendicular to each other in the holder 411 in this example.

Here, specific examples of numerical values of dimensions related to the holder 411 will be described. Note that the numerical values are not limited to those in this example, and other arbitrary numerical values may be used.

The length 21 of one width (the width in the X-axis direction in this example) of the substantially square shape that the main body 421 has is about 65 mm, and the length L22 of the other width (the width in the Y-axis direction in this example) is about 68 mm, and the plate thickness (the length of the thickness in the Z-axis direction in this example) is about 0.3 to 0.5 mm.

The length L23 of the width (the width in the X-axis direction in this example) of the surface 422 of one of the claw portions is about 40 mm, and the length L24 of the portion projecting as a claw is about 3 to 6 mm. The length L25 of the width (the width in the X-axis direction in this example) of the surface 423 of the other claw portion is about 30 mm, and the length L26 of the projecting portion of the claw is about 2 to 4 mm.

The lengths L27 and L29 of the two claw portions in the height direction (the Z-axis direction in this example) are about 5 mm.

The length L30 of the surfaces of the side surface portions 426 and 427 in the height direction (the Z-axis direction in this example) is about 5 mm.

The size of the band insertion hole (the length L28 in the height direction (the Z-axis direction in this example) and the lengths L31 and L32 in the width direction (the direction in parallel to the XY plane in this example)) is slightly larger than the size of the band used.

The thickness (length L33) of the rubber plate 461 in the height direction (the Z-axis direction in this example) is about 2 mm.

### [Another configuration example (third example) of holder of ACM sensor]

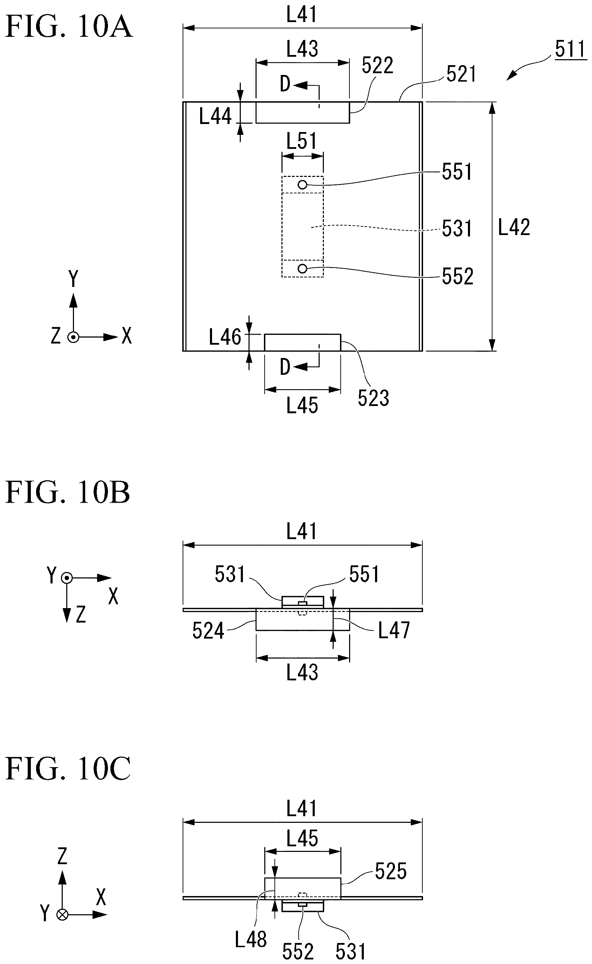

Fig. 10A is a diagram (front view) illustrating an outline configuration of a holder 511 (third example) of the ACM sensor 11.

Fig. 10B is a diagram (plan view) illustrating an outline configuration of the holder 511 (third example) of the ACM sensor 11.

Fig. 10C is a diagram (bottom view) illustrating an outline configuration of the holder 511 (third example) of the ACM sensor 11.

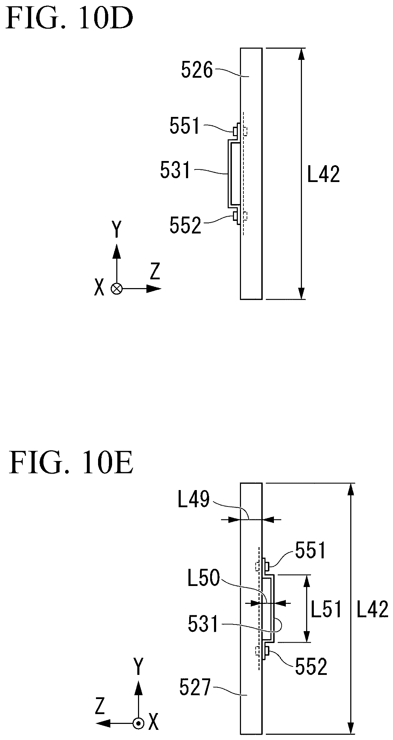

Fig. 10D is a diagram (left side view) illustrating an outline configuration of the holder 511 (third example) of the ACM sensor 11.

Fig. 10E is a diagram (right side view) illustrating an outline configuration of the holder 511 (third example) of the ACM sensor 11.

Note that although the diagrams are referred to as the front view, the plan view, the bottom view, the left side view, and the right side view in this example for convenience of explanation, an arbitrary surface of the holder 511 may be regarded as a front surface or another surface.

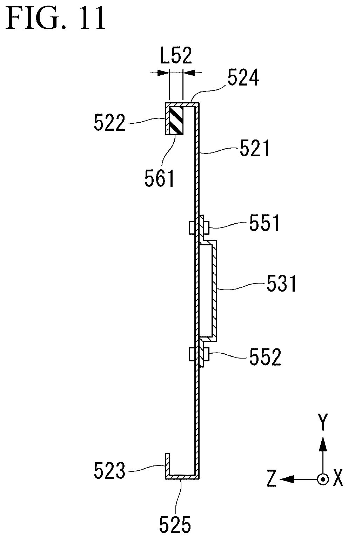

Fig. 11 is a central sectional view (D-D sectional view) illustrating an outline configuration of the holder 511 (third example) of the ACM sensor 11. Fig. 11 is a D-D sectional view with respect to Fig. 10A (front view).

Figs. 10A to 10E and 11 illustrate XYZ orthogonal coordinate systems for convenience of explanation.

In an outline, the holder 511 includes a main body 521, two claw portions (a claw portion including surfaces 522 and 524 and a claw portion including surfaces 523 and 525), and one cover portion 531.

The main body 521 has a flat plate shape, and the surface of the flat plate (the surface in parallel to the XY plane in this example) has a substantially square shape.

The main body 521 includes the two claw portions. Each of the two claw portions is provided at each of two facing sides of the substantially square shape that the main body 521 has. The two claw portions are provided at the centers of the respectively corresponding sides of the main body 521. One of the claw portions includes the surface 522 and the surface 524. The other claw portion includes the surface 523 and the surface 525.

The cover portion 531 with a rectangular-shaped portion projecting therefrom is provided at the center of the surface on the side opposite to the surface of the main body 521 in which the two claw portions are provided. The surface of the quadrangular shape that the cover portion 531 has is smaller than the surface of the quadrangular shape that the main body 521 has, and a disposition in which the centers of these surfaces coincide with each other is employed. The rectangular shape that the cover portion 531 has include long sides along a direction (the Y-axis direction in this example) in which the two claw portions face each other. Two locations of a portion (the portion that does not project) in the surroundings of the projecting portion of the cover portion 531 are connected and fastened to the main body 521 using two rivets 551 and 552. These two locations are provided one by one at the respective positions that are close to the two claw portions. The portion (the portion that does not project) in the surrounding has a size (the width and the like) capable of supporting the band.

Side surface portions 526 and 527 are provided at two different facing sides of the substantially square shape that the main body 521 has relative to the two claw portions. Each of the side surface portions 526 and 527 has a plate-shaped surface (the surface in parallel to the YZ plane in this example).

With the cover portion 531, a hole (band insertion hole) penetrating in a direction in which the two side surface portions 526 and 527 face each other (the X-axis direction in this example) is provided. The band insertion hole is formed of a space between the projecting portion of the cover portion 531 and the surface of the main body 521.

Also, a rubber plate 561 is provided inside one of the claw portions (the claw portion including the surface 522 and the surface 524).

The band can be inserted through the holder 511 in one direction (the X-axis direction in this example) in this example.

Here, specific examples of numerical values of dimensions related to the holder 511 will be described. Note that the numerical values are not limited to those in this example, and other arbitrary numerical values may be used.

The length L41 of one width (the width in the X-axis direction in this example) of the substantially square shape that the main body 521 has is about 65 mm, the length L42 of the other width (the width in the Y-axis direction in this example) is about 68 mm, and the plate thickness (the length of the thickness in the Z-axis direction in this example) is about 0.3 to 0.5 mm.

The length L43 of the width (the width in the X-axis direction in this example) of the surface 522 of one of the claw portions is about 40 mm, and the length L44 of the portion projecting as a claw is about 3 to 6 mm. The length L45 of the width (the width in the X-axis direction in this example) of the surface 523 of the other claw portion is about 30 mm, and the length L46 of the portion projecting as a claw is about 2 to 4 mm.

The lengths L47 and L48 of the two claw portions in the height direction (the Z-axis direction in this example) are about 5 mm.

The length L49 of the surfaces of the side surface portions 526 and 527 in the height direction (the Z-axis direction in this example) is about 5 mm.

The size of the band insertion hole (the length L50 in the height direction (the Z-axis direction in this example) and the length L51 in the direction along the side surface (the Y-axis direction in this example)) is slightly larger than the size of the band used.

The thickness (length L52) of the rubber plate 561 in the height direction (the Z-axis direction in this example) is about 2 mm.

### [Another configuration example (fourth example) of holder of ACM sensor]

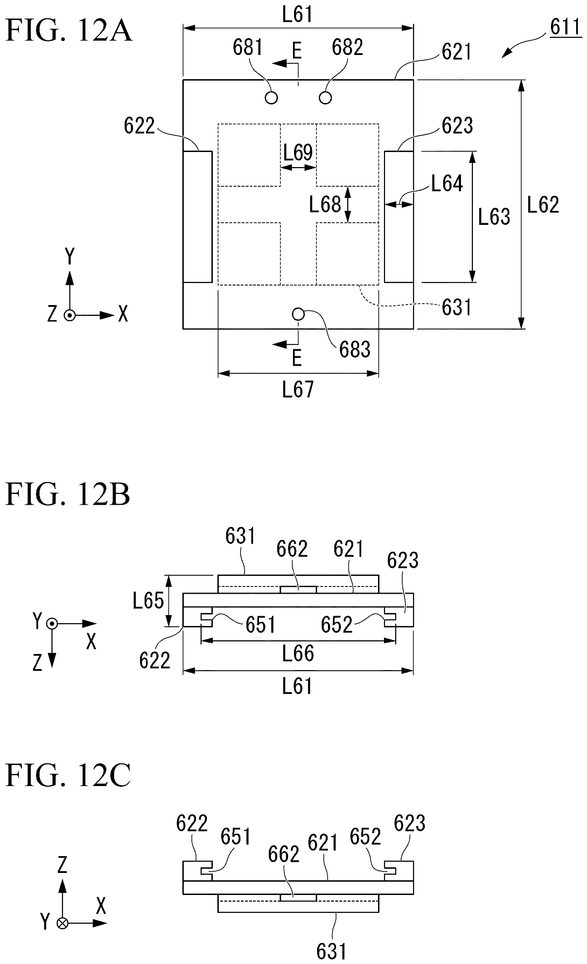

Fig. 12A is a diagram (front view) illustrating an outline configuration of a holder 611 (fourth example) of the ACM sensor 11 according to an embodiment of the invention.

Fig. 12B is a diagram (plan view) illustrating an outline configuration of the holder 611 (fourth example) of the ACM sensor 11 according to an embodiment of the invention.

Fig. 12C is a diagram (bottom view) illustrating an outline configuration of the holder 611 (fourth example) of the ACM sensor 11 according to an embodiment of the invention.

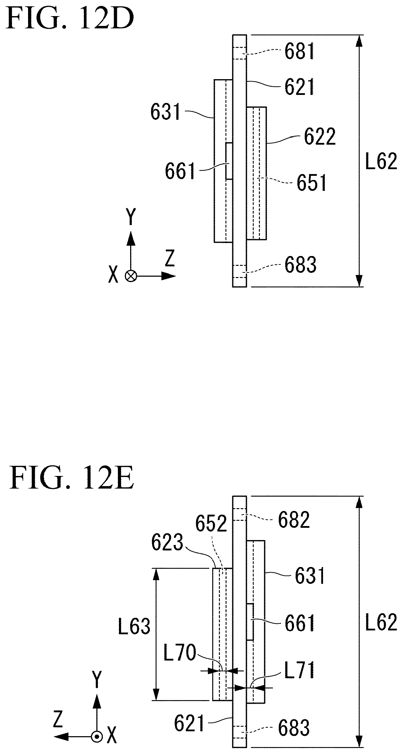

Fig. 12D is a diagram (left side view) illustrating an outline configuration of the holder 611 (fourth example) of the ACM sensor 11 according to an embodiment of the invention.

Fig. 12E is a diagram (right side view) illustrating an outline configuration of the holder 611 (fourth example) of the ACM sensor 11 according to an embodiment of the invention.

Note that although the drawings are referred to as the front view, the plan view, the bottom view, the left side view, and the right side view in this example for convenience of explanation, an arbitrary surface of the holder 611 may be regarded as a front surface or another surface.

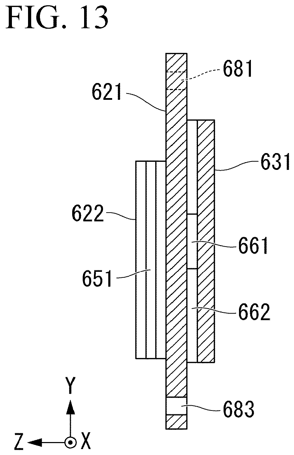

Fig. 13 is a central sectional view (E-E sectional view) illustrating an outline configuration of the holder 611 (fourth example) of the ACM sensor 11 according to an embodiment of the invention. Fig. 13 is an E-E sectional view with respect to Fig. 12A (front view).

Figs. 12A to 12E and 13 illustrate XYZ orthogonal coordinate systems for convenience of explanation.

In an outline, the holder 611 includes a main body 621, two claw portions 622 and 623, and one cover portion 631.

The main body 621 has a flat plate shape, and the surface of the flat plate (the surface in parallel to the XY plane in this example) has a substantially square shape.

The main body 621 includes two claw portions 622 and 623. Each of the two claw portions 622 and 623 is provided at each of two facing sides of the substantially square shape that the main body 621 has. The two claw portions are provided at predetermined locations (locations slightly deviating from the centers in this example) of the respectively corresponding sides of the main body 621. The two claw portions 622 and 623 have grooves (sensor fitting grooves 651 and 652) into which the sensor (for example, the ACM sensor 11) disposed in a region therebetween can be fitted, respectively. These sensor fitting grooves 651 and 652 have slit shapes.

The cover portion 631 with a square shape is provided at the center of the surface on the side opposite to the surface of the main body 621 in which the two claw portions 622 and 623 are provided. The surface with the quadrangular shape that the cover portion 631 has is smaller than the surface of the quadrangular shape that the main body 621 has, and a disposition in which the centers of these surfaces coincide with each other is employed. A hole (band insertion hole 661), which extends in the direction (the X-axis direction in this example) in which the two claw portions 622 and 623 face each other, through which the band can be inserted, is provided in the cover portion 631. Also, a hole (band insertion hole 662), which extends in a vertical direction (the Y-axis direction in this example) relative to the direction in which the two claw portions 622 and 623 face each other, through which the band can be inserted, is provided in the cover portion 631. These two band insertion holes 661 and 662 pass through the center of the surface (the surface in parallel to the XY plane in this example) of the cover portion 631, are connected to each other, and has a cross (+) shape as a whole.

The cover portion 631 has a size (the width and the like) capable of supporting the band.

The surface of the main body 621 has three penetrating holes 681 to 683 for insertion of stoppers.

The two holes 681 and 682 are present on a one end side (the positive side of the Y axis in this example) of the vertical direction (the Y-axis direction in this example) relative to the direction in which the two claw portions 622 and 623 face each other and at positions that are symmetric with respect to the center in the direction in which the two claw portions 622 and 623 face each other (the X-axis direction in this example) in the surface of the main body 621. The distance by which these two holes 681 and 682 are away from each other is slightly longer than the width (the width in the X-axis direction in the example) of the band insertion hole 662.

Also, the one hole 683 is provided on the other end side (the negative side of the Y axis in this example) of the vertical direction (the Y-axis direction in this example) relative to the direction in which the two claw portions 622 and 623 face each other and at the center in the direction (the X-axis direction in this example) in which the two claw portions 622 and 623 face each other in the surface of the main body 621.

The band can be inserted through the holder 611 in this example in each of the two directions (the X-axis direction and the Y-axis direction in this example) that are perpendicular to each other.

Here, specific examples of numerical values of dimensions related to the holder 611 will be described. Note that the numerical values are not limited to those in the example, and other arbitrary numerical values may be used.

The length L61 of one width (the width in the X-axis direction in this example) of the substantially square shape that the main body 621 has is about 78 mm, and the length L62 of the other width (the width in the Y-axis direction in this example) is about 85 mm.

The length L63 of the widths (the widths in the Y-axis direction in this example) of the claw portions 622 and 623 is about 25 to 45 mm and the length L64 of a portion protruded as a claw is about 10 mm.

The plate thickness (the length L65 of the thickness in the Z-axis direction in this example) of the sum of the main body 621, the claw portions 622 and 623, and the cover portion 631 is about 17 mm.

The length L66 of the distance between the sensor fitting grooves 651 and 652 provided at the two claw portions 622 and 623 is about 64 to 65 mm. In this example, the length of the side of the sensor (for example, the ACM sensor 11) fitted between these sensor fitting grooves 651 and 652 is set to 64 mm, and the length L66 of the distance between these sensor fitting grooves 651 and 652 is set to be slightly greater than that (64 mm).

The length L67 of one side of the square shape that the cover portion 631 has is about 55 mm.

The length L68 of the width (the width in the Y-axis direction in this example) of the band insertion hole 661 and the length L69 of the width (the width in the X-axis direction in this example) of the band insertion hole 662 are respectively about 12 to 22 mm.

The length L70 of the thickness of the two sensor fitting grooves 651 and 652 in the height direction (the Z-axis direction in this example) is about 1.5 to 4 mm. The length L70 is slightly larger than the thickness of the sensor (the ACM sensor 11, for example).

The length L71 of the thicknesses of the two band insertion holes 661 and 662 in the height direction (the Z-axis direction in this example) is about 2 mm. The length L71 is slightly greater than the thickness of the band.

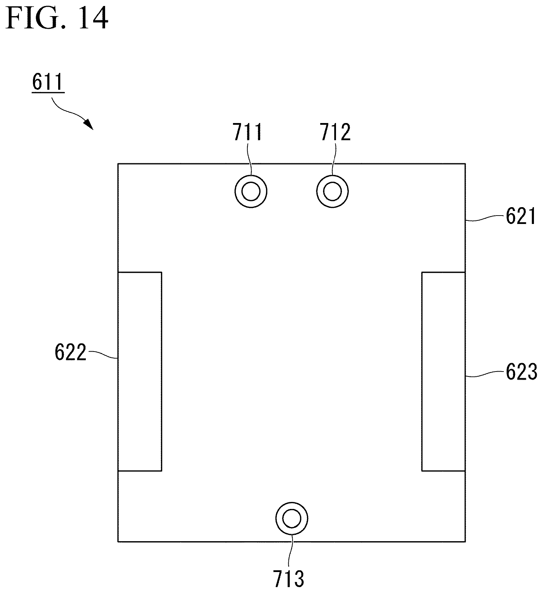

Fig. 14 is a diagram (front view) illustrating an outline appearance of the holder 611 (fourth example) of the ACM sensor 11 according to an embodiment of the invention.

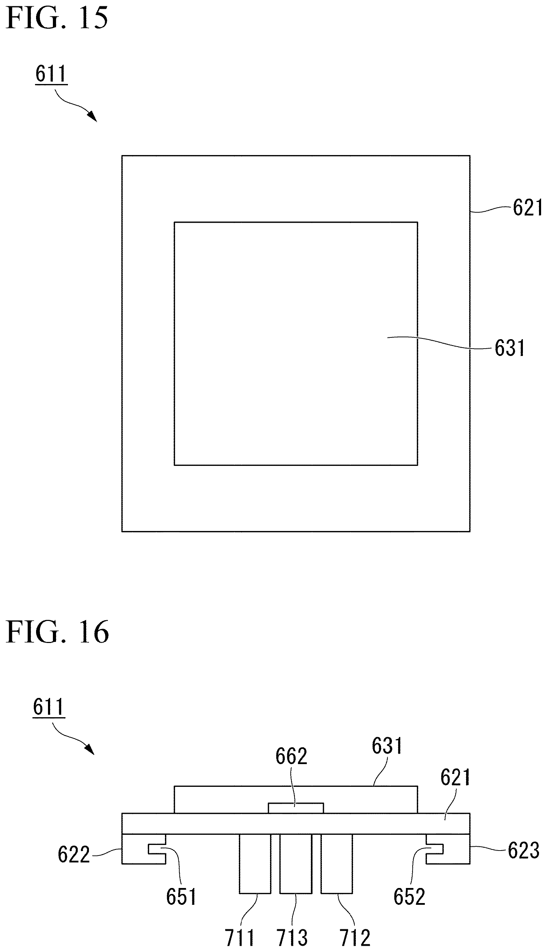

Fig. 15 is a diagram (back view) illustrating an outline appearance of the holder 611 (fourth example) of the ACM sensor 11 according to an embodiment of the invention.

Fig. 16 is a diagram (plan view) illustrating an outline appearance of the holder 611 (fourth example) of the ACM sensor 11 according to an embodiment of the invention.

Here, the examples in Figs. 14 to 16 illustrate a state in which stoppers 711 to 713 are inserted into the respective holes 681 to 683. It is possible to secure the ACM sensor 11 (or an exposure test piece in a case in which it is used) fitted into the sensor fitting grooves 651 and 652 with the stoppers 711 to 713 such that the ACM sensor 11 is not pulled out.

### [Direction in which ACM sensor is disposed]

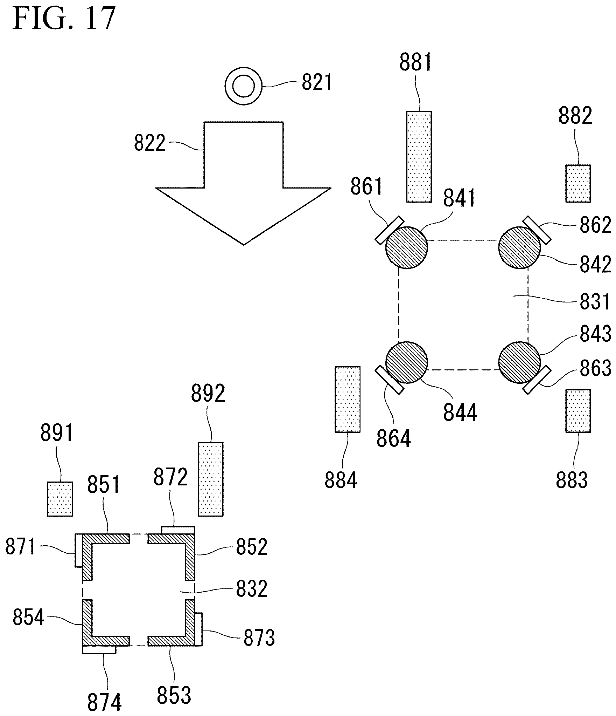

Referring to Fig. 17, a direction in which the ACM sensor 11 is disposed will be described.

Fig. 17 is a diagram illustrating an example of a relationship between a main wind direction 822 and a measurement results obtained by ACM sensors 861 to 864 and 871 to 874 (each of which is the ACM sensor 11 in this example).

Fig. 17 illustrates a chimney 821 and a direction of main wind (main wind direction 822).

Also, Fig. 17 illustrates a steel tower 831 placed in the vicinity of the chimney 821, four leg portions 841 to 844 that the steel tower 831 has, the ACM sensors 861 to 864 provided at the respective leg portions 841 to 844 (each of which is the ACM sensor 11 in this example), and output current ratios 881 to 884 that are measurement results obtained by the respective ACM sensors 861 to 864.

In addition, Fig. 17 illustrates another steel tower 832 placed in the vicinity of the chimney 821, four leg portions 851 to 854 that the steel tower 832 has, ACM sensors 871 to 874 provided at the respective leg portions 851 to 854 (each of which is the ACM sensor 11 in this example), and output current ratios 891 and 892 that are measurement results obtained by the respective ACM sensors 871 to 874.

Here, the respective output current ratios 881 to 884, 891, and 892 are ratios of average values of currents output from the respective ACM sensors 861 to 864, 871, and 872 in a predetermined period, and the example in Fig. 17 represents that the corrosion speed is higher as the length of a bar is longer.

In the example in Fig. 17, the distance of the steel tower 831 from the chimney 821 is shorter as compared with the steel tower 832, and the respective ACM sensors 861 to 864 are placed in an orientation that is achieved by being caused to rotate by 45 degrees (or 135 degrees) from the main wind direction 822.

Meanwhile, the distance of the steel tower 832 from the chimney 821 is longer to some extent as compared with the steel tower 831 (by several tens of meters, for example), the two ACM sensors 871 and 873 are placed in an orientation that is achieved by being caused to rotate by 90 degrees from the main wind direction 822, the one ACM sensor 872 is placed in the main wind direction 822, and the one ACM sensor 874 is placed in an orientation that is achieved by being caused to rotate by 180 degrees from the main wind direction 822.

In the example in Fig. 17, a relationship between the disposition of the chimney 821, the main wind direction 822, and the output current ratios (corrosion speeds) of the ACM sensors 861 to 864, 871, and 872 will be discussed.

The portion with the largest output current ratio among the ACM sensors 861 to 864 placed at the respective leg portions 841 to 844 of the steel tower 831 is the ACM sensor 861 placed substantially in the main wind direction 822. Also, the portions with small output current ratio are the ACM sensor 862 and the ACM sensor 863 placed in the direction that is substantially opposite to the main wind direction 822.

The output current ratios 882 and 884 of the ACM sensors 862 and 864 placed at the leg portion 842 and the leg portion 844 of the steel tower 831 are smaller than the output current ratio 892 of the ACM sensor 872 placed at the leg portion 852 of the steel tower 832. That is, in the example in Fig. 17, the output current ratio 892 and the corrosion speed of the ACM sensor 872 that is placed in the main wind direction 822 at the steel tower 832 that is far from the chimney 821 to some extent are greater than those of the ACM sensors 862 and 864 that are placed in the orientation achieved by being caused to rotate by 45 degrees (or 135 degrees) with respect to the main wind direction 822 at the steel tower 831 that is close to the chimney 821.

Based on this, it is preferable to evaluate the corrosion speed while placing the ACM sensor 11 such that the sensor surface of the ACM sensor 11 is directed in the main wind direction 822 since the output current ratio (corrosion speed) of the ACM sensor 11 placed such that the sensor surface (the surface on the side of the sensor) of the ACM sensor 11 is directed in the main wind direction 822 becomes the largest at the same location in this example.

In the embodiment, the ACM sensor 11 is placed such that the sensor surface (the surface, for example) is directed in the main wind direction 822. In this disposition, the probability at which floating substances in the air, such as sea salt particles or dust, are carried by wind toward the ACM sensor 11 is high (the highest, for example). Therefore, in such a disposition, the probability at which the floating substances in the air adhering to the sensor surface of the ACM sensor 11 is high, and as a result, the amount of substances adhering to the sensor surface increases.

Meanwhile, the main wind direction 822 has a large influence not only on an increase in the corrosion speed due to the adhesion of the floating substances in the air but also on a decrease in the corrosion speed caused by dropping of the adhering substances due to wind or wind and rain. Therefore, the degree of the dropping of the substances that once adhere thereto may be evaluated by the ACM sensor 11 that is placed such that the sensor surface of the ACM sensor 11 is directed in the main wind direction 822.

Although there may be an influence as described above, the ACM sensor 11 placed such that the sensor surface of the ACM sensor 11 is directed in the main wind direction 822 can measure corrosion that depends on the adhering substances and wetness with the highest sensitivity (or such a case frequently occurs).

### [Attachment of ACM sensor]

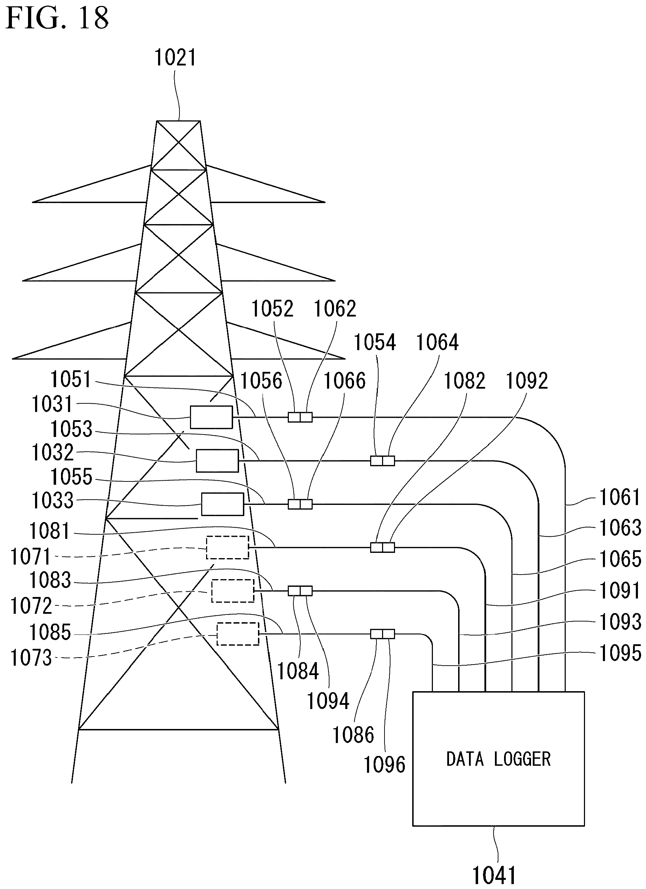

Fig. 18 is a diagram illustrating an outline configuration of attachment of the ACM sensor 11.

In the example in Fig. 18, six ACM sensors 1031 to 1033 and 1071 to 1073 (each of which is the ACM sensor 11 in this example) are attached to a steel tower 1021. Note that in this embodiment, the respective ACM sensors 1031 to 1033 and 1071 to 1073 are attached along with temperature and humidity sensors (not illustrated).

Also, the ACM sensor 1031 using aluminum (Al), the ACM sensor 1032 using zinc (Zn), and the ACM sensor 1033 using iron (Fe) are provided in this order from the higher side toward the lower side of the steel tower 1021 outside the steel tower 1021. In this manner, it is possible to reduce (minimize, for example) an influence of adhesion to the lower ACM sensor after corrosion products fall from the upper ACM sensor, for example, to obtain satisfactory sensitivity of the sensors.

Also, the ACM sensor 1071 using aluminum (Al), the ACM sensor 1072 using zinc (Zn), and the ACM sensor 1073 using iron (Fe) are provided in this order from the higher side toward the lower side of the steel tower 1021 inside the steel tower 1021. In this manner, it is possible to reduce (minimize, for example) an influence of adhesion to the lower ACM sensor after corrosion products fall from the upper ACM sensor, for example, to obtain satisfactory sensitivity of the sensors.

Note that the ACM sensors 1031 to 1033 provided outside the steel tower 1021 and the ACM sensors 1071 to 1073 provided inside the steel tower 1021 are in the respectively independent environments, and a disposition relationship between the ACM sensors 1031 to 1033 outside the steel tower 1021 and the ACM sensors 1071 to 1073 inside the steel tower 1021 may be an arbitrary relationship. For example, three ACM sensors (one set) on an arbitrary side among the ACM sensors 1031 to 1033 outside the steel tower 1021 and the ACM sensors 1071 to 1073 inside the steel tower 1021 may be provided at higher positions than those of three ACM sensors (one set) on the other side, or ACM sensors 1031 to 1033 outside the steel tower 1021 and the ACM sensors 1071 to 1073 inside the steel tower 1021 may be disposed in a manner in which the ACM sensors alternately aligned from the higher side to the lower side.

A device that stores data (data logger 1041) is provided at or near the steel tower 1021.

The respective ACM sensors 1031 to 1033 and 1071 to 1073 include cables 1051, 1053, 1055, 1081, 1083, and 1085 provided with connectors 1052, 1054, 1056, 1082, 1084, and 1086.

The data logger 1041 includes cables 1061, 1063, 1065, 1091, 1093, and 1095 provided with connectors 1062, 1064, 1066, 1092, 1094, and 1096 for the respective ACM sensors 1031 to 1033 and 1071 to 1073.

Also, the connectors 1052, 1054, 1056, 1082, 1084, and 1086 on the side of the respective ACM sensors 1031 to 1033 and 1071 to 1073 are connected to the respective connectors 1062, 1064, 1066, 1092, 1094, and 1096 on the side of the data logger 1041 in a communicable manner. In this manner, the respective ACM sensors 1031 to 1033 and 1071 to 1073 transmit data obtained by measuring output currents for each predetermined time to the data logger 1041, and the data logger 1041 receives and stores the data.

It is possible to evaluate corrosion properties in an environment of ambient air through human operations or processing using a device on the basis of the data stored in the data logger 1041.

Note that although the example in Fig. 18 illustrates the configuration in which the ACM sensors 1031 to 1033 and 1071 to 1073 are provided at high locations of the steel tower 1021, the ACM sensors 1031 to 1033 and 1071 to 1073 may be provided at the leg portions or the like of the steel tower 1021 in another configuration example.

Also, the ACM sensors may be provided at electric power facility other than the steel tower 1021.

In addition, the ACM sensors 1031 to 1033 and 1071 to 1073 experience corrosion and become degraded due to exposure, periodic replacement is preferably performed in order to acquire appropriate data. In one example, the ACM sensors 1031 to 1033 and 1071 to 1073 and battery of the data logger 1041 may be replaced for every predetermined period, and the data stored in the data logger 1041 may be collected. Inspection and the like of adhering substances may be performed using the collected ACM sensors 1031 to 1033 and 1071 to 1073.

Also, although the example in Fig. 18 illustrates the configuration in which one common data logger 1041 is provided for the six ACM sensors 1031 to 1033 and 1071 to 1073, different data loggers may be used for each of the ACM sensors 1031 to 1033 and 1071 to 1073 in another configuration example.

In addition, although the example in Fig. 18 illustrates the configuration in which the six ACM sensors 1031 to 1033 and 1071 to 1073 are provided at one location that is a measurement location, the embodiment is not limited thereto, and an arbitrary number of one or more ACM sensors may be provided at one location that is a measurement point, for example.

In addition, water-proofing protection tapes may be wound around the portions corresponding to the connectors 1052, 1054, 1056, 1082, 1084, 1086, 1062, 1064, 1066, 1092, 1094, and 1096, for example.

Also, although the case in which one set of three ACM sensors (the ACM sensors 1031 to 1033 or the ACM sensors 1071 to 1073) is disposed on each of the outer side and the inner side of the steel tower 1021 has been described in the embodiment, the embodiment is not necessarily limited thereto, and an arbitrary number of one or more ACM sensors may be provided. Also, an arbitrary material (for example, aluminum, zinc, iron, or the like) may be used as a material of the ACM sensors. Also, an arbitrary order may be used as an alignment order (disposition) of these plurality of ACM sensors in a case in which a plurality of ACM sensors are disposed and materials of the respective ACM sensors are different from each other.

Note that the ACM sensors may be provided only on one of the outer side and the inner side of the steel tower 1021, for example. In a specific example, the ACM sensors are provided both outside and inside the steel tower or the like using an angled material (with a mountain-like shape, for example) such as an L material to perform measurement in some cases.

### [Processing of evaluation corrosion speed]

Hereinafter, processing of evaluating a corrosion speed will be described. Note that the procedure for the processing described below is an example, and other arbitrary processing and the order thereof may be used.

### <Processing 1: Decision of range (region) in which corrosion speed map is created, number of ACM sensors to be placed, and the like>

First, a range in which a corrosion speed map is created is decided, and the number of the ACM sensors 11 to be placed in the range and the like are decided. Note that such a decision may be made on the basis of a result of field investigation, for example.

In a method in the related art, it is necessary to decide about five to eight locations (reference points) at which a data logger and ACM sensors are to be placed in a circular region (area) with a radius of about 10 km, for example, and to perform measurement with the ACM sensors 11 at the respective reference points in a case in which a corrosion speed map is created. However, such a method in the related art requires a large burden for placing the data logger, wiring, and the like.

Meanwhile, according to the improved method (the method disclosed in Patent Literature 2 as an example), it is only necessary to decide one location as a point (reference point) at which a data logger and an ACM sensor are placed and to decide about four to six locations as points (surrounding points) at which only ACM sensors are to be placed without any data loggers in a case in which a corrosion speed map of a circular region with a radius of about 10 km is created, for example.

According to such an improved method, it is possible to place only the ACM sensors at the surrounding points, to bring back the ACM sensors after elapse of a predetermined period, and to evaluate a corrosion speed.

Further, in a case in which a corrosion speed map of a wider range is created, it is possible to use a method of increasing measurement groups in a case of a circular region with a radius of about 10 km, for example.

In a specific example, five locations are decided as points at which data loggers and ACM sensors are to be placed, and about sixteen locations are decided as points at which only the ACM sensors are to be placed in a case of a circular region with a radius of about 20 km. That is, the entire circular region with the radius of about 20 km is covered with an image in which four measurement groups in a case of a circular region with a radius of about 10 km are placed and the data loggers and the ACM sensors are placed at the central position of the circular shape with the radius of about 20 km.

### <Processing 2: Decision of points (measurement points) at which measurement using ACM sensors is performed>

Points at which measurement using the ACM sensors is to be performed are decided in the range in which the corrosion speed map is created. In this case, even a disposition may be used or an uneven disposition may be used as a disposition of the plurality of measurement points. Here, an arbitrary method may be used as a method of deciding the measurement points.

In one example, a data logger 1041 and the ACM sensor 11 are placed at one point, and the ACM sensors 11 (with no data loggers) are placed at four points in a case of a circular region with a radius of about 10 km.

In one example, the data loggers 1041 and the ACM sensors 11 are placed at five points, and the ACM sensors 11 (with no data loggers) are placed at sixteen points in a case of a circular region with a radius of about 20 km.

### <Processing 3: Creation of corrosion speed map>

Map information (corrosion speed map) representing distribution of corrosion speeds is created on the basis of data related to the corrosion speeds obtained at the measurement points.

For example, a corrosion speed map is created through multiple regression analysis using the corrosion speed data at the measurement points, weather factors, and terrain factors. When the corrosion speed map is created on the basis of the corrosion speed data at the measurement points in this manner, an arbitrary method may be used as a method of estimating the corrosion speed at points (non-measurement points) other than the measurement points, and in one example, the method disclosed in Patent Literature 1 may be used.

In another example, a method of interpolating values of the corrosion speeds at the non-measurement points using the values of the corrosion speed data at the measurement points may be used as the method of estimating the corrosion speeds at the non-measurement points. As a method of performing this interpolation, a method using an average value (an average value based on spatial positions, for example) or a weighted average value at the non-measurement points for the values of the corrosion speed data at the plurality of measurement points may be used, a method of using (directly) a value of corrosion speed data at a measurement point at the closest distance from a non-measurement point, or the like may be used.

### <Processing of estimating corrosion speed data at non-measurement points from corrosion speed data at measurement points>

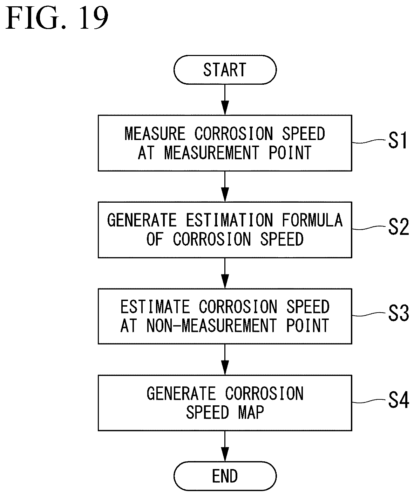

Fig. 19 is a diagram illustrating an example of a flow of processing of estimating corrosion speed data at the non-measurement points from the corrosion speed data at the measurement points.

Note that the procedure for the processing illustrated in Fig. 19 is an example, and other arbitrary processing and the order thereof may be used.

### (Step S 1)

Measurement of corrosion speeds at the measurement points is performed.

### (Step S2)

A formula for estimating corrosion speed that also covers the region of the points (non-measurement points) other than the measurement points is created on the basis of the results of measuring the corrosion speeds at the measurement points.

### (Step S3)

Corrosion speeds at the non-measurement points are estimated on the basis of the generated formula for estimating the corrosion speeds.

### (Step S4)

A corrosion speed map is created by combining the measurement results at the measurement points with the estimation results at the non-measurement points.

### <Processing of estimating corrosion speed in accordance with measurement result obtained by evaluation target ACM sensor from measurement result obtained by reference ACM sensor>

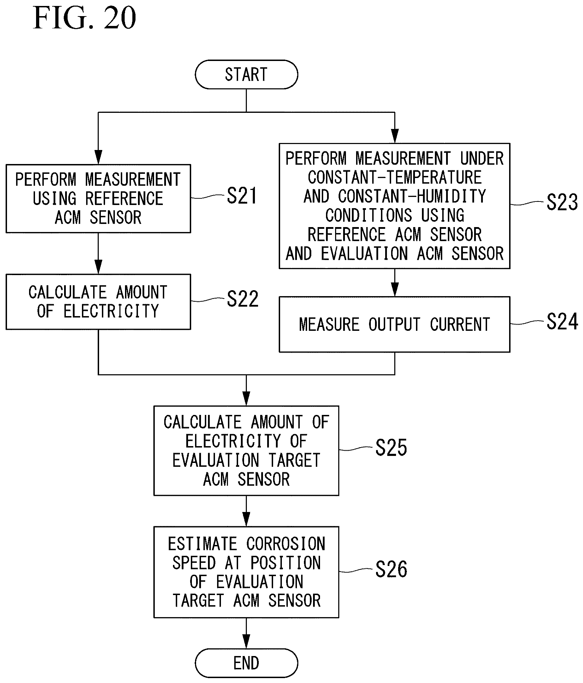

Fig. 20 is a diagram illustrating an example of a flow of processing of estimating a corrosion speed in accordance with a measurement result obtained by an evaluation target ACM sensor from measurement results obtained by the reference ACM sensor.

Note that although a case in which the method disclosed in Patent Literature 2 is used is illustrated in the example in Fig. 20, another arbitrary method may be used.

Also, the procedure for the processing illustrated in Fig. 20 is an example, and another arbitrary processing and the order thereof may be used.

In addition, arbitrary one of the processing as illustrated in Fig. 19 and the processing as illustrated in Fig. 20 may be used, or both the processing as illustrated in Fig. 19 and the processing as illustrated in Fig. 20 may be used in combination, for example.

Here, the reference ACM sensor is the ACM sensor 11 provided along with the data logger 1041, and data of the measurement result obtained by the reference ACM sensor is stored in the data logger 1041.

Also, the evaluation target ACM sensor is the ACM sensor 11 with which no data logger is provided, and data of the measurement result obtained by the evaluation target ACM sensor is not stored in the data logger.

### (Step S21)

Measurement is performed by the reference ACM sensor.

### (Step S22)

The amount of electricity is calculated on the basis of the measurement result in Step S21.

### (Step S23)

For the reference ACM sensor and the evaluation target ACM sensor, measurement under constant-temperature and constant-humidity conditions is performed.

### (Step S24)

An output current is calculated on the basis of the measurement result in Step S23.

Here, the processing in Step S23 and Step S24 may be performed before or after the processing in Step S21 and Step S22 or may be performed at another timing, for example.

### (Step S25)

The amount of electricity of the evaluation target ACM sensor is calculated on the basis of the calculation result in Step S22 and the calculation result in Step S24.

### (Step S26)

The corrosion speed at the position (measurement point) of the evaluation target ACM sensor is estimated on the basis of the calculation result in Step S25.

Here, various kinds of evaluation may be performed as evaluation based on the measurement results of the ACM sensor 11. As such evaluation, corrosion speeds at the plurality of measurement points and the non-measurement points in a predetermined period (for example, predetermined months or predetermined years) may be evaluated, for example. Also, types, concentrations, and the like of substances adhering to the ACM sensor 11 are examined (measured), and corrosion factors may be evaluated.

Also, a map (corrosion speed map) describing information that indicates the values of the corrosion speeds at the positions corresponding to the plurality of measurement points and the non-measurement points may be created, for example. Numerical values, for example, may be used, or colors, patterns, or the like may be used as the information.

Also, a table listing information regarding corrosion speeds and the like may be created for each measurement target (a steel tower, for example), for example.

### [Technologies that can be used in embodiments]

Details of the technologies disclosed in Japanese Patent No. 5066955 (a patent literature corresponding to Patent Literature 1) will be described. A part or entirety of the details of the technologies may be used in the embodiments.

In one example, a corrosion speed evaluation method in which a virtual wet time obtained by applying a weight in accordance with a relative humidity of 0% to 100% at least as one of explanatory variables is included for performing multiple regression analysis using a corrosion speed of a metal material as an objective variable and using environmental factors and terrain factors that affect the corrosion speed as explanatory variables, the virtual wet time is obtained by summing up multiplied values obtained by multiplying times corresponding to varying relative humidity by weight coefficients that are different in accordance with the varying relative humidity, a corrosion speed estimation formula is obtained through the multiple regression analysis method on the basis of the measured corrosion speed of the metal material, the corrosion speed of the metal material at a non-measurement area is arithmetically estimated on the basis of the obtained corrosion speed estimation formula, and for the weighting of the virtual wet time, the weighting is performed in consideration of at least any one of the amount of substances adhering the metal material, the types of the adhering substances, environmental conditions, weather conditions, and terrain conditions in a target area of the arithmetic estimation of the corrosion speed for each target area is exemplified.

In one example, the virtual wet time is weighted on the basis of a corrosion speed of the metal material detected by the ACM sensor, a corrosion speed of the metal material obtained through an exposure test, or a corrosion speed obtained from corrosion conditions of the metal material forming an actual member in the corrosion speed evaluation method.

In one example, a corrosion speed map of a metal material in a wide range of area is created on the basis of the corrosion speed of the metal material obtained through the aforementioned arithmetic estimation in the corrosion speed evaluation method.

Details of technologies disclosed in Japanese Patent No. 4724649 (a patent literature corresponding to Patent Literature 2) will be described. A part or entirety of the details of the technologies may be used in the embodiments.

In one example, a corrosion speed estimation method of a structure using an ACM sensor that includes: (1) a process of connecting a data logger to a surface portion of an actual structure such that it is possible to measure temporal data of an output current, obtaining the amount of electricity on the basis of temporal output current data of a reference ACM sensor placed for a predetermined period, and in parallel to this, placing an evaluation target ACM sensor on a different surface portion of the actual structure for a predetermined period in a state in which electric continuity is established between an anode and a cathode instead of connecting the data logger; (2) a process of placing the evaluation target ACM sensor along with the reference ACM sensor under constant-temperature and constant humidity conditions and measuring the respective output currents; (3) a process of obtaining the amount of electricity of the evaluation target ACM sensor on the basis of a relationship between the current output from the reference ACM sensor and the current output from the evaluation target ACM sensor in the process (2) and the amount of electricity of the reference ACM sensor; and (4) a process of obtaining an estimation corrosion speed of the actual structure on the basis of the amount of electricity of the evaluation target ACM sensor obtained in the process (3) and a preset relationship between the amount of electricity and the corrosion speed is exemplified.

In one example, the method of estimating a corrosion speed of a structure using an ACM sensor includes: (2-2) a process of analyzing substances adhering to a surface of the evaluation target ACM sensor and obtaining an analysis current value; and (2-3) a process of correcting a measurement output current value of the evaluation target ACM sensor from a correlation between a measurement output current value and the analysis current value of the evaluation target ACM sensor under constant-temperature and constant-humidity conditions.

In one example, the types and the amounts of adhering ions are analyzed in the analysis of the adhering substances in the method of estimating a corrosion speed of a structure using an ACM sensor.

In one example, evaluation target ACM sensors are grouped into a group in which the amount of basic ions is large and a group in which the amount of basic ions is not large on the basis of the analysis data of the adhering substances in advance, and the analysis current value is then obtained for each of the groups in the method of estimating a corrosion speed of a structure using an ACM sensor.

In one example, the grouping is performed in a case in which an abnormality value is recognized in measurement current values obtained in the process (2) in the method of estimating a corrosion speed of a structure using an ACM sensor.

In one example, a material forming the structure is steel, zinc, or aluminum in the method of estimating a corrosion speed of a structure using an ACM sensor.

In one example, the amount of electricity is an integrated amount of electricity (C) or a day average amount of electricity (C/day) in the method of estimating a corrosion speed of a structure using an ACM sensor.

### [Summary of embodiments]

As described above, the holder 111 of the ACM sensor 11 according to the embodiment can hold the ACM sensor 11, and the ACM sensor 11 can be attached to a measurement target in a state in which the ACM sensor 11 is held. According to the holder 111 of the ACM sensor 11 according to the embodiment, it is possible to efficiently place the ACM sensor 11. Also, according to the holder 111 of the ACM sensor 11 in the embodiment, it is possible to secure an appropriate placement position or a placement direction of the ACM sensor 11 and thereby to accurately perform measurement.

In the embodiment, the ACM sensor 11 is disposed toward in the main wind direction, and this enables to realize high measurement sensitivity.

Also, according to the embodiment, it is possible to cause mapping precision related to corrosion to be improved by estimating information related to corrosion at a location, at which no measurement result has been obtained in relation to corrosion, on the basis of a measurement result related to corrosion.

In this manner, according to the embodiment, it is possible to precisely perform evaluation related to the corrosion by estimating information related to corrosion of a metal material at a location (non-measurement point), at which such measurement has not been performed, on the basis of data of measurement in relation to the corrosion of the metal material.

Also, according to the embodiment, it is possible to save manpower cost and material cost in a case in which information related to corrosion in a wide range is estimated, for example.

Here, although the configuration in which the corrosion speed of the metal material is measured with the ACM sensor at the measurement point has been described in the embodiment, a configuration in which the corrosion speed of the metal material is obtained in an exposure test, a configuration in which the corrosion speed of the metal material is obtained from actual corrosion conditions of the metal material, or the like may be used as another configuration example.

Note that the embodiment may be applied to fields other than the field of electric power facility, for example.

A configuration in which a part or an entirety of the processing in the corrosion evaluation method according to the aforementioned embodiments is executed by a device (corrosion evaluation device) such as a computer may be used. The corrosion evaluation device may include a function of executing the processing in response to an operation performed by a person (user), for example, or may include a function of executing the processing on the basis of predefined information (for example, a program and parameters), or may include both of these functions in combination.

The processing may be performed by recording a program for realizing the functions of the device (for example, a corrosion evaluation device) according to the aforementioned embodiments in a computer-readable recording medium causing a and computer system to read and execute the program recorded in the recording medium. Note that the "computer system" described herein may include an operating system (OS) or hardware such as peripheral devices. Also, the "computer-readable recording medium" refers to a storage device such as a writable non-volatile memory such as a flexible disc, a magneto-optical disc, a read only memory (ROM), or a flash memory, a portable medium such as a digital versatile disk (DVD), or a hard disk incorporated in the computer system. Further, the "computer-readable recording medium" is assumed to include a recording medium that holds the program for a predetermined time, such as a non-volatile memory (for example, a dynamic random access memory (DRAM)) inside the computer system that serves as a server or a client in a case in which the program is transmitted via a network such as the Internet or via a communication link such as a telephone line.

Also, the aforementioned program may be delivered to another computer system via a delivery medium or through a carrier wave in the delivery medium from the computer system that stores the program in a storage device or the like. Here, the "delivery medium" through which the program is delivered refers to a medium that has a function of delivering information such as a network (communication network) such as the Internet or a communication link (communication line) such as a telephone line.

Also, the aforementioned program may be for realizing a part of the aforementioned functions. Further, the aforementioned program may be a program that can realize the aforementioned functions in combination with a program that has already been recorded in the computer system, that is, a so-called differential file (differential program).

### [Reference Signs List]

11, 861 to 864, 871 to 874, 1031 to 1033, 1071 to 1073 ACM sensor
21 Steel substrate
22, 22a, 22b Conductive member
23, 23a, 23b Insulating member
31, 32 Connecting location
41, 42 Conductive wire
51 Current measuring instrument
111, 411, 511, 611 Holder
121, 421, 521, 621 Main body
122 to 125, 422 to 425, 522 to 525 Surface (surface of claw portion)
126, 127, 526, 527 Side surface portion
131, 141 Band insertion hole
161, 461, 561 Rubber plate
211, 211a to 211c Band
221, 222 Fastening portion
231 Loop
301 Pillar
311, 321, 351, 1051, 1053, 1055, 1061, 1063, 1065, 1081, 1083, 1085, 1091, 1093, 1095 Cable
312, 322, 352, 1052, 1054, 1056, 1062, 1064, 1066, 1082, 1084, 1086, 1092, 1094, 1096 Connector
431, 531, 631 Cover portion
451 to 454, 551, 552 Rivet
622, 623 Claw portion
651, 652 Sensor fitting groove
661, 662 Band insertion hole
681 to 683 Hole
711 to 713 Stopper
821 Chimney
822 Main wind direction
831, 832 Steel tower
841 to 844, 851 to 854 Leg portion
881 to 884, 891, 892 Output current ratio
1021 Steel tower

## Claims

1. An atmospheric corrosion monitor, ACM, sensor placement device comprising:
a holder (611) comprising:
a main body (621) with two opposite surfaces, including two claw portions (622, 623), each of which being provided at each of two facing sides of a first one of the two surfaces of the main body, the claw portions each being provided with a sensor fitting groove (651, 652);
a cover portion (631) being provided on the second one of the two surfaces of the main body,
**characterized in that**
two band insertion holes (661, 662) configured to receive an insertable band are provided in the cover portion (631), a first one (661) of the band insertion holes extending in the direction in which the two claw portions (622, 623) face each other, and the second one (662) of the band insertion holes extending perpendicular to the direction in which the two claw portions (622, 623) face each other, wherein the band insertion holes (661, 662) are connected to each other, and form a cross shape as a whole,
the main body (621) comprises penetrating stopper insertion holes (681, 682, 683) each configured for insertion of a stopper, and provided on opposite end sides of the main body (621), as seen perpendicular to the direction in which the two claw portions (622, 623) face each other, and
the two claw portions (622, 623) and the stopper insertion holes (681, 682, 683) are configured for securing an ACM sensor in the holder (611).

2. The ACM sensor placement device according to claim 1, wherein the main body (621) has a flat plate shape.

3. The ACM sensor placement device according to any one of the preceding claims, wherein the main body (621) comprises three penetrating stopper insertion holes (681, 682, 683), wherein two stopper insertion holes (681, 682) are provided on one end side of the main body (621), and one stopper insertion hole (683) is provided on the other end side of the main body (621),

4. The ACM sensor placement device according to claim 3, wherein the distance by which the two stopper insertion holes (681, 682) that are provided on one end side of the main body (621) are away from each other is greater than the width of the second one (662) of the band insertion holes.

5. An ACM assembly comprising:
an ACM sensor placement device according to any one of the preceding claims; and
an ACM sensor (11) fitted in the sensor fitting grooves (651, 652) of the claw portions (622, 623) and secured by stoppers (711, 712, 713) inserted in the stopper insertion holes (681, 682, 683).

6. The ACM assembly according to claim 5, further comprising a band inserted in any one of the band insertion holes (661, 662).

## Patentansprüche

1. Eine atmosphärische Korrosionsmonitor, ACM, Sensorplatzierungsvorrichtung umfassend:
einen Halter (611), der Folgendes umfasst:
einen Grundkörper (621) mit zwei gegenüberliegenden Oberflächen, einschließlich zweier Klauenabschnitte (622, 623), die jeweils an einer der beiden einander zugewandten Seiten der ersten der beiden Oberflächen des Grundkörpers vorgesehen sind, wobei die Klauenabschnitte jeweils mit einer Sensoreinbaunut (651, 652) versehen sind;
ein Abdeckteil (631), das auf der zweiten der beiden Oberflächen des Grundkörpers vorgesehen ist,
**dadurch gekennzeichnet, dass**
zwei Bandeinführungslöcher (661, 662), die so konfiguriert sind, dass sie ein einführbares Band aufnehmen, in dem Abdeckteil (631) vorgesehen sind, wobei sich ein erstes (661) der Bandeinführungslöcher in der Richtung erstreckt, in der die beiden Klauenabschnitte (622, 623) einander zugewandt sind, und das zweite (662) der Bandeinführungslöcher sich senkrecht zu der Richtung erstreckt, in der die beiden Klauenabschnitte (622, 623) einander zugewandt sind, wobei die Bandeinführungslöcher (661, 662) miteinander verbunden sind und als Ganzes eine Kreuzform bilden,
der Grundkörper (621) durchgehende Stoppereinführungslöcher (681, 682, 683) aufweist, die jeweils für das Einsetzen eines Stoppers konfiguriert sind, und an gegenüberliegenden Endseiten des Grundkörpers (621) vorgesehen sind, betrachtet senkrecht zu der Richtung, in der die beiden Klauenabschnitte (622, 623) einander zugewandt sind, und
die beiden Klauenabschnitte (622, 623) und die Stoppereinführungslöcher (681, 682, 683) so konfiguriert sind, dass sie einen ACM-Sensor im Halter (611) befestigen.

2. Die ACM-Sensorplatzierungsvorrichtung nach Anspruch 1, wobei der Grundkörper (621) die Form einer flachen Platte hat.

3. Die ACM-Sensorplatzierungsvorrichtung nach einem der vorhergehenden Ansprüche, wobei der Grundkörper (621) drei durchgehende Stoppereinführungslöcher (681, 682, 683) aufweist, wobei zwei Stoppereinführungslöcher (681, 682) an einer Endseite des Grundkörpers (621) vorgesehen sind und ein Stoppereinführungsloch (683) an der anderen Endseite des Grundkörpers (621) vorgesehen ist.

4. Die ACM-Sensorplatzierungsvorrichtung nach Anspruch 3, wobei der Abstand, der zwischen den beiden Stoppereinführungslöchern (681, 682), die an einer Endseite des Grundkörpers (621) vorgesehen sind, ausgebildet ist, größer ist als die Breite des zweiten (662) der Bandeinführungslöcher.

5. Eine ACM-Baugruppe, die Folgendes umfasst:
eine ACM-Sensorplatzierungsvorrichtung nach einem der vorhergehenden Ansprüche; und
einen ACM-Sensor (11), der in die Sensoreinbaunuten (651, 652) der Klauenabschnitte (622, 623) eingepasst und durch Stopper (711, 712, 713) gesichert ist, die in die Stoppereinführungslöcher (681, 682, 683) eingesetzt sind.

6. Die ACM-Baugruppe nach Anspruch 5, die ferner ein Band umfasst, das in eines der Bandeinführungslöcher (661, 662) eingeführt ist.

## Revendications

1. Dispositif de placement de capteur de surveillance de la corrosion atmosphérique, ACM, comprenant :
un support (611) comprenant :
un corps principal (621) avec deux surfaces opposées, comprenant deux parties griffes (622, 623), chacune étant disposée sur chacun des deux côtés opposés d'une première des deux surfaces du corps principal, les parties griffes étant chacune pourvu d'une rainure de montage de capteur (651, 652) ;
une partie de couvercle (631) étant prévue sur la seconde des deux surfaces du corps principal,
**caractérisé en ce que**
deux trous d'insertion de bande (661, 662) configurés pour recevoir une bande insérable sont prévus dans la partie de couvercle (631), un premier (661) des trous d'insertion de bande s'étendant dans la direction dans laquelle les deux parties griffes ( 622, 623) se font face, et le deuxième (662) des trous d'insertion de bande s'étendant perpendiculairement à la direction dans laquelle les deux parties griffes (622, 623) se font face, les trous d'insertion de bande (661, 662) sont reliés les uns aux autres et forment une forme de croix dans son ensemble,
le corps principal (621) comprend des trous d'insertion de butée pénétrante (681, 682, 683), chacun étant configuré pour l'insertion d'une butée, et étant disposé sur les côtés d'extrémité opposés du corps principal (621), vu perpendiculairement à la direction dans laquelle les deux parties griffes (622, 623) se font face, et
les deux parties griffes (622, 623) et les trous d'insertion de butée (681, 682, 683) sont configurés pour fixer un capteur ACM dans le support (611).

2. Dispositif de placement de capteur ACM selon la revendication 1, dans lequel le corps principal (621) a une forme de plaque plate.

3. Dispositif de placement de capteur ACM selon l'une quelconque des revendications précédentes, dans lequel le corps principal (621) comprend trois trous d'insertion de butée pénétrante (681, 682, 683) dans lequel deux trous d'insertion de butée (681, 682) sont prévus sur un côté d'extrémité du corps principal (621) et un trou d'insertion de butée (683) est prévu sur l'autre côté d'extrémité du corps principal (621).

4. Dispositif de placement de capteur ACM selon la revendication 3, dans lequel la distance par laquelle les deux trous d'insertion de butée (681, 682) qui sont prévus sur un côté d'extrémité du corps principal (621) sont éloignés l'un de l'autre est supérieure à la largeur du deuxième (662) des trous d'insertion de la bande.

5. Un ensemble ACM comprenant :
un dispositif de placement de capteur ACM selon l'une quelconque des revendications précédentes ; et
un capteur ACM (11) installé dans les rainures de montage de capteur (651, 652) des parties griffes (622, 623) et fixé par des butées (711, 712, 713) insérées dans les trous d'insertion de butée (681, 682, 683).

6. Ensemble ACM selon la revendication 5, comprenant en outre une bande insérée dans l'un quelconque des trous d'insertion de bande (661, 662).
